# EUROPEAN PATENT APPLICATION

(11) **EP 4 527 672 A1**
(43) Date of publication of application: **26.03.2025**
(21) Application number: 23890455.1
(22) Date of filing: 12.10.2023
(51) Int. Cl.: B60L 15/20, B60L 15/32, B60L 15/38, B60W 10/08

(54) **CONTROL APPARATUS FOR POWER SYSTEM OF ELECTRIC VEHICLE AND RELATED DEVICE THEREOF**

(30) Priority: 14.11.2022 CN 202211423076
(71) Applicant: Huawei Digital Power Technologies Co., Ltd., Shenzhen, Guangdong 518043 (CN)
(72) Inventor: YANG, Peng, Shenzhen, Guangdong 518043 (CN); ZHAO, Yu, Shenzhen, Guangdong 518043 (CN); HU, Chenhui, Shenzhen, Guangdong 518043 (CN); QIAO, Sen, Shenzhen, Guangdong 518043 (CN)
(74) Representative: Maiwald GmbH
(86) International application number: PCT/CN2023/124227
(87) International publication number: WO 2024/104018

(57) **Abstract**

This application provides a control apparatus for a power system of an electric vehicle and a related device thereof. The control apparatus obtains a driving mode of the electric vehicle, a running parameter of the electric vehicle, and a running parameter of the power system, and in response to an accelerator signal or a brake signal of the electric vehicle, outputs a torque allocation ratio of a front drive motor to a rear drive motor based on the driving mode of the electric vehicle, the running parameter of the electric vehicle, and the running parameter of the power system. During implementation of this application, the motor is flexibly controlled by considering impact of a plurality of factors, to achieve good reliability.

## Description

This application claims priority to Chinese Patent Application No. 202211423076.6, filed with the China National Intellectual Property Administration on November 14, 2022 and entitled "CONTROL APPARATUS FOR POWER SYSTEM OF ELECTRIC VEHICLE AND RELATED DEVICE THEREOF", which is incorporated herein by reference in its entirety.

### TECHNICAL FIELD

This application relates to the field of new energy vehicles, and in particular, to a control apparatus for a power system of an electric vehicle and a related device thereof.

### BACKGROUND

Currently, in a running process of a vehicle, torque allocation is mainly determined based on an accelerator signal and a brake signal. For example, a vehicle control unit in an electric vehicle calculates required torque of the vehicle based on an opening degree of an accelerator apparatus and an opening degree of a brake apparatus, and a motor is controlled to rotate with the required torque as a target, so that the motor can output the required torque to drive a wheel. It can be seen that, in the conventional technology, an accelerator and a brake are mainly considered for motor control. Only a single factor is considered, which results in insufficient flexibility of motor control.

### SUMMARY

This application provides a control apparatus for a power system of an electric vehicle and a related device thereof, so that a motor is flexibly controlled by considering impact of a plurality of factors, to achieve good reliability.

According to a first aspect, an embodiment of this application provides a control apparatus for a power system of an electric vehicle, where the electric vehicle has a plurality of driving modes that can be switched. The power system and the control apparatus are located in the electric vehicle, and include a front drive motor and a rear drive motor. It may be understood that, the control apparatus is different from the power system. The control apparatus may communicate with the power system, obtain a running parameter from the power system, and may further control rotation of the front drive motor and the rear drive motor in the power system.

During specific implementation, the control apparatus obtains a driving mode of the electric vehicle, a running parameter of the electric vehicle, and a running parameter of the power system, and in response to an accelerator signal or a brake signal of the electric vehicle, outputs a torque allocation ratio of the front drive motor to the rear drive motor based on the driving mode of the electric vehicle, the running parameter of the electric vehicle, and the running parameter of the power system. It should be explained that the running parameter of the electric vehicle includes an entire vehicle speed and a steering wheel angle, and the running parameter of the power system includes a temperature, efficiency, and running duration of the front drive motor, and a temperature, efficiency, and running duration of the rear drive motor.

In embodiments of this application, the torque output by the motor is dynamically adjusted while impact of the motor efficiency, a running rate of the controller, and a motor service life is comprehensively considered. In embodiments of this application, the motor can be controlled with energy efficiency, power control, and the motor service life considered, so that power performance, economy, and use reliability of the electric vehicle are improved in a balanced manner.

With reference to the first aspect, in a first possible implementation, when the electric vehicle runs in any one of the plurality of driving modes, in response to that a change amplitude of either the running parameter of the electric vehicle or the running parameter of the power system exceeds a preset value, the control apparatus may adjust the torque allocation ratio of the front drive motor to the rear drive motor.

With reference to the first aspect or with reference to the first possible implementation of the first aspect, in a second possible implementation, the control apparatus may be specifically implemented as a vehicle control unit, and the power system includes a primary controller and a secondary controller. In this case, the vehicle control unit separately sends a control instruction to the primary controller and the secondary controller based on the torque allocation ratios. In this case, the primary controller and the secondary controller respectively adjust, based on the control instruction sent by the vehicle control unit, torque output by the front drive motor and torque output by the rear drive motor.

With reference to the first aspect or with reference to the first possible implementation of the first aspect, in a third possible implementation, the control apparatus may be specifically implemented as a primary controller and a secondary controller. The primary controller may adjust the torque output by the front drive motor based on the torque allocation ratio, and send a control instruction to the secondary controller based on a torque allocation proportion of the rear drive motor. In this case, the secondary controller adjusts the torque output by the rear drive motor based on the control instruction sent by the primary controller.

With reference to the first aspect or any one of the foregoing possible implementations of the first aspect, in a fourth possible implementation, the electric vehicle includes an accelerator apparatus and a brake apparatus. The accelerator apparatus may receive triggering by a driver and output the accelerator signal, and the brake apparatus may receive triggering by the driver and output the brake signal. An input end of the control apparatus is directly connected to the accelerator apparatus and the brake apparatus to receive the accelerator signal and the brake signal.

With reference to the first aspect or any one of the foregoing possible implementations of the first aspect, in a fifth possible implementation, the electric vehicle includes an angle sensing apparatus, where the angle sensing apparatus may monitor an angle by which a steering wheel turns and output a steering wheel angle signal. The input end of the control apparatus is directly connected to the angle sensing apparatus to receive the steering wheel angle signal.

With reference to the first aspect or with reference to any one of the foregoing possible implementations of the first aspect, in a sixth possible implementation, the front drive motor and the rear drive motor each are provided with a temperature sensing apparatus, and the temperature sensing apparatuses respectively obtain a temperature of the front drive motor and a temperature of the rear drive motor and output temperature signals. In this case, the control apparatus is configured to directly connect to the temperature sensing apparatuses to receive the temperature signals.

With reference to the first aspect or with reference to any one of the foregoing possible implementations of the first aspect, in a seventh possible implementation, the control apparatus obtains the running parameter of the electric vehicle and the running parameter of the power system according to a first frequency, and the control apparatus outputs the torque allocation ratio of the front drive motor to the rear drive motor according to a second frequency. The first frequency is greater than the second frequency.

With reference to the first aspect or any one of the foregoing possible implementations of the first aspect, in an eighth possible implementation, the control apparatus stores a plurality of torque allocation tables and a plurality of groups of weights. The plurality of torque allocation tables include a correspondence between a plurality of reference torque allocation ratios and at least two parameters of the running parameter of the electric vehicle and the running parameter of the power system. Each group of weights in the plurality of groups of weights corresponds to one driving mode, and each group of weights includes a plurality of weight parameters. One of the plurality of weight parameters corresponds to one torque allocation table in the plurality of torque allocation tables. In a specific implementation, based on the running parameter of the electric vehicle and the running parameter of the power system, the control apparatus searches for and determines the plurality of reference torque allocation ratios in the plurality of torque allocation tables. In addition, the control apparatus outputs the torque allocation ratio of the front drive motor to the rear drive motor based on one group of weights that corresponds to the driving mode of the electric vehicle and the plurality of reference torque allocation ratios.

With reference to the eighth possible implementation of the first aspect, in a ninth possible implementation, the plurality of torque allocation tables include a first torque allocation table, and the plurality of reference torque allocation ratios include a first reference torque allocation ratio. The first torque allocation table includes a correspondence between efficiency of the front drive motor, efficiency of the rear drive motor, and the first reference torque allocation ratio. Based on the obtained efficiency of the front drive motor and the obtained efficiency of the rear drive motor, the control apparatus may search for and determine the first reference torque allocation ratio in the first torque allocation table.

With reference to the ninth possible implementation of the first aspect, in a tenth possible implementation, the plurality of torque allocation tables include a second torque allocation table, and the plurality of reference torque allocation ratios include a second reference torque allocation ratio. The second torque allocation table includes a correspondence between a temperature and running duration of the front drive motor, a temperature and running duration of the rear drive motor, and the second reference torque allocation ratio. Based on the obtained temperature and running duration of the front drive motor and the obtained temperature and running duration of the rear drive motor, the control apparatus may search for and determine the second reference torque allocation ratio in the second torque allocation table.

With reference to the tenth possible implementation of the first aspect, in an eleventh possible implementation, the plurality of torque allocation tables include a third torque allocation table, the plurality of reference torque allocation ratios include a third reference torque allocation ratio, and the third torque allocation table includes a correspondence between an entire vehicle speed, a steering wheel angle, and the third reference torque allocation ratio. Based on the obtained entire vehicle speed and the obtained steering wheel angle, the control apparatus may search for and determine the third reference torque allocation ratio in the third torque allocation table.

With reference to the eleventh possible implementation of the first aspect, in a twelfth possible implementation, the control apparatus determines one group of weights based on the driving mode of the electric vehicle, and obtains, through calculation based on the first reference torque allocation ratio and a weight parameter corresponding to the first reference torque allocation ratio, the second reference torque allocation ratio and a weight parameter corresponding to the second reference torque allocation ratio, and the third reference torque allocation ratio and a weight parameter corresponding to the third reference torque allocation ratio, a torque allocation ratio corresponding to the driving mode of the electric vehicle.

With reference to the first aspect or with reference to any one of the foregoing possible implementations of the first aspect, in a thirteenth possible implementation, the input end of the control apparatus further obtains a vehicle speed of the electric vehicle. In embodiments of this application, in response to that the vehicle speed of the electric vehicle is greater than a first preset speed threshold, the control apparatus further increases a reference torque allocation proportion of the front drive motor in each intelligent driving mode, to control the first inverter circuit to increase a current output to the front drive motor. In practice, the front drive motor may be a motor configured to drive a front wheel, that is, a front drive; and the rear drive motor may be a motor configured to drive a rear wheel, that is, a rear drive. Therefore, when the electric vehicle is in a high-speed driving state, the torque output by the front drive may be increased, and the torque output by the rear drive may be decreased, to increase a grip force of the electric vehicle and prevent the vehicle from slipping, thereby improving driving safety.

With reference to the first aspect or with reference to any one of the foregoing possible implementations of the first aspect, in a fourteenth possible implementation, the input end of the control apparatus further obtains mileage information of the entire electric vehicle. In embodiments of this application, in response to that an entire vehicle mileage carried in the mileage information of the entire electric vehicle is greater than a preset mileage threshold, the control apparatus further decreases a reference torque allocation proportion of the front drive motor in each intelligent driving mode, to control the first inverter circuit to decrease the current output to the front drive motor. In embodiments of this application, service lives of the two motors can be better balanced.

With reference to the first aspect or with reference to any one of the foregoing possible implementations of the first aspect, in a fifteenth possible implementation, the input end of the control apparatus further obtains steering information of the entire electric vehicle. In embodiments of this application, in response to that the steering information of the entire vehicle carries a target identifier, the control apparatus further increases a reference torque allocation proportion of the rear drive motor in each intelligent driving mode, to control the secondary controller to increase a current output by the second inverter circuit to the rear drive motor. In this application, when the electric vehicle is in a turning state, the torque output by the rear drive is increased, to help the electric vehicle turn, thereby improving driving performance of the electric vehicle.

According to a second aspect, an embodiment of this application provides an electric drive system, where the electric drive system includes a front drive motor, a rear drive motor, a first inverter circuit, a second inverter circuit, and the control apparatus with reference to the first aspect or any one of the foregoing possible implementations of the first aspect. The first inverter circuit outputs a current based on a torque allocation proportion of the front drive motor that is output by the control apparatus, to control rotation of the front drive motor; and the second inverter circuit outputs a current based on a torque allocation proportion of the rear drive motor that is output by the control apparatus, to control rotation of the rear drive motor.

According to a third aspect, an embodiment of this application provides an electric vehicle, where the electric vehicle includes a power battery and the electric drive system described with reference to the second aspect, and the power battery is connected to an input end of a first inverter circuit and an input end of a second inverter circuit.

It should be understood that mutual reference may be made to the implementations and beneficial effects of the foregoing aspects of this application.

### BRIEF DESCRIPTION OF DRAWINGS

FIG. 1 is a diagram of a scenario of an electric vehicle according to an embodiment of this application;
FIG. 2 is a block diagram of a structure of an electric drive system according to an embodiment of this application;
FIG. 3 is a diagram of a control process of a motor according to an embodiment of this application; and
FIG. 4 is another block diagram of a structure of an electric drive system according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

Technical solutions of this application are further described below in detail with reference to the accompanying drawings.

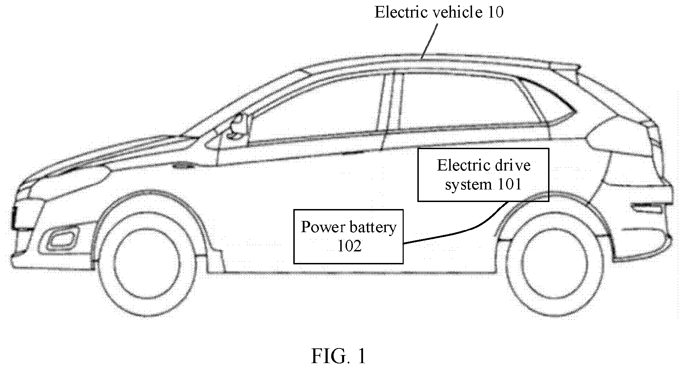

FIG. 1 is a diagram of a scenario of an electric vehicle according to an embodiment of this application. As shown in FIG. 1, an electric vehicle 10 includes an electric drive system 101 and a power battery 102 connected to the electric drive system 101. The power battery 102 provides a power supply to the electric drive system 101.

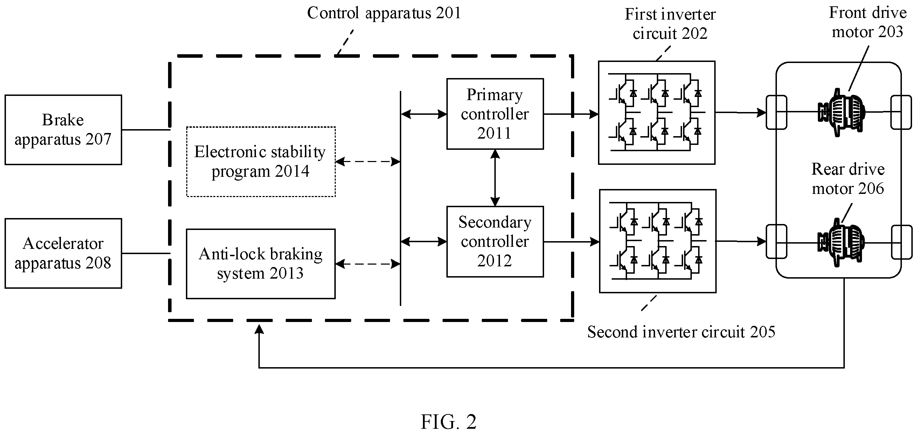

In an embodiment, a structure of the electric drive system 101 may be shown in FIG. 2. The electric drive system 101 includes a control apparatus 201, a first inverter circuit 202, a front drive motor 203, a second inverter circuit 205, and a rear drive motor 206.

During specific implementation, an input end of the control apparatus 201 is connected to a brake apparatus 207 and an accelerator apparatus 208, an output end of the control apparatus 201 is connected to a control end of the first inverter circuit 202 and a control end of the second inverter circuit 205, and an input end of the first inverter circuit 202 and an input end of the second inverter circuit 205 are connected to the power battery. In addition, an output end of the first inverter circuit 202 is connected to the front drive motor 203. In this case, the first inverter circuit 202 may convert a voltage of the power battery, to output a current to the front drive motor 203, so as to drive the front drive motor 203. An output end of the second inverter circuit 205 is connected to the rear drive motor 206. In this case, the second inverter circuit 205 may convert the voltage of the power battery, to output a current to the rear drive motor 206, so as to drive the rear drive motor 206.

The control apparatus 201 includes a primary controller 2011 and a secondary controller 2012. In this case, the brake apparatus 207 and the accelerator apparatus 208 are specifically directly connected to an input end of the primary controller 2011, an output end of the primary controller 2011 is specifically connected to the control end of the first inverter circuit 202, and an output end of the secondary controller 2012 is specifically connected to the control end of the second inverter circuit 205. It may be understood that the brake apparatus 207 may output a brake signal, and the accelerator apparatus 208 may output an accelerator signal. The accelerator signal and the brake signal are generated through triggering by stepping down an accelerator pedal or a brake pedal by a driver. In this embodiment of this application, the brake apparatus 207 and the accelerator apparatus 208 are directly connected to the primary controller 2011; and the primary controller 2011 may directly respond to the accelerator signal and the brake signal, and control torque output by the front drive motor 203 and torque output by the rear drive motor 206.

The secondary controller 2012 is connected to the primary controller 2011. For example, the secondary controller 2012 may be directly connected to the primary controller 2011. Alternatively, the primary controller 2011 and the secondary controller 2012 are connected to a power CAN bus, so that the primary controller 2011 and the secondary controller 2012 may communicate with each other through the power CAN bus.

The primary controller 2011 and the secondary controller 2012 may be specifically implemented as a central processing unit (central processing unit, CPU), another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like.

The control apparatus 201 further includes an anti-lock braking system 2013. The anti-lock braking system 2013 may calculate an entire vehicle speed based on a wheel speed sensed by a speed sensor. The speed sensor is disposed on a wheel. Alternatively, the control apparatus 201 further includes an electronic stability program 2014. In this case, the electronic stability program 2014 may alternatively calculate an entire vehicle speed based on a wheel speed sensed by a speed sensor. For a specific manner of calculating the entire vehicle speed, refer to the conventional technology. Details are not described herein again.

A communication end of the primary controller 2011 is connected to the power CAN bus, and the anti-lock braking system 2013 and the electronic stability program 2014 are also connected to the power CAN bus. In this case, the primary controller 2011 may obtain the entire vehicle speed from the anti-lock braking system 2013 or the electronic stability program 2014 through the power CAN bus.

In an embodiment, the primary controller 2011 is integrated with the first inverter circuit 202, or the primary controller 2011, the first inverter circuit 202, and the front drive motor 203 may be integrated.

In an embodiment, the secondary controller 2012 is integrated with the second inverter circuit 205, or the secondary controller 2012, the second inverter circuit 205, and the rear drive motor 206 may be integrated.

For example, the first inverter circuit 202 and the second inverter circuit 205 may be a three-phase two-level inverter, a three-phase three-level inverter, or a three-phase multi-level inverter. That is, specific implementations of the first inverter circuit 202 and the second inverter circuit 205 are not limited in embodiments of this application, provided that a direct current output by the power battery can be converted into an alternating current for driving the motor.

With reference to the accompanying drawings, the following describes how the primary controller specifically controls the motor with a plurality of factors considered.

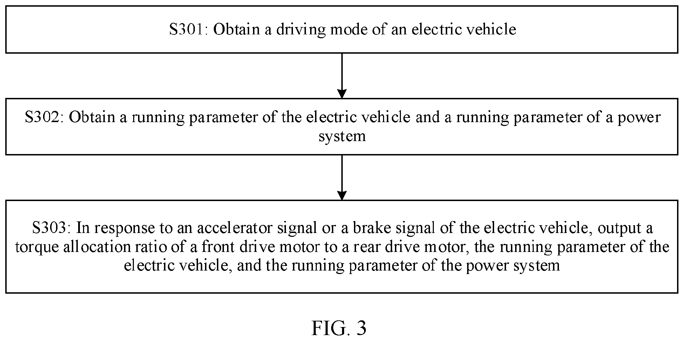

In an embodiment, the primary controller 2011 may perform steps in a diagram of a control process shown in FIG. 3. In this case, the primary controller 2011 specifically performs the following steps.

S301: The primary controller 2011 obtains a driving mode of an electric vehicle. The electric vehicle has a plurality of driving modes that can be switched. It should be noted that, in embodiments of this application, an example in which the plurality of driving modes include a default driving mode, a first intelligent driving mode, a second intelligent driving mode, and a third intelligent driving mode is used. During specific implementation, different types of driving modes may be set based on actual application.

In an embodiment, the driving mode may be input by a user. In this case, the primary controller 2011 may obtain the driving mode of the electric vehicle by detecting input of the user. For example, one button is correspondingly set for one driving mode. If the primary controller 2011 detects that a button corresponding to any driving mode is pressed, it is determined that the electric vehicle is in the driving mode. It may be understood that various driving modes may alternatively be selected by the user by tapping a vehicle display. In embodiments of this application, how the user specifically inputs the driving mode is not limited. The driving mode may be input by pressing the button, tapping the display, or the like.

In an embodiment, the primary controller 2011 may determine, based on a running parameter of the electric vehicle, the driving mode of the electric vehicle. The running parameter of the electric vehicle includes an entire vehicle speed, a steering wheel angle, an entire vehicle acceleration, and the like. For example, when the entire vehicle speed is less than a first preset speed threshold, the primary controller 2011 determines that the electric vehicle is in the default driving mode. Alternatively, when the steering wheel angle is less than a preset angle, the primary controller 2011 determines that the electric vehicle is in the default driving mode. Specifically, how to determine, based on a vehicle status, the driving mode of the electric vehicle may be adjusted based on actual application. This is not limited herein.

S302: The primary controller 2011 obtains the running parameter of the electric vehicle and a running parameter of a power system. The running parameter of the electric vehicle includes the entire vehicle speed and the steering wheel angle, and the running parameter of the power system includes a temperature, efficiency, and running duration of the front drive motor 203, and a temperature, efficiency, and running duration of the rear drive motor 206.

During specific implementation, the primary controller 2011 may obtain the entire vehicle speed and the steering wheel angle from the anti-lock braking system 2013 or the electronic stability program 2014.

Alternatively, the input end of the primary controller 2011 is directly connected to an angle sensing apparatus. In this case, the angle sensing apparatus may monitor an angle by which a steering wheel turns, and output a steering wheel angle signal. In this case, the primary controller 2011 may directly receive the steering wheel angle signal from the angle sensing apparatus according to a first frequency. For example, the angle sensing apparatus may be specifically implemented as a steering wheel angle sensor.

In an embodiment, the input end of the primary controller 2011 is connected to a temperature sensing apparatus, and the temperature sensing apparatus may be disposed on a housing of the motor. For example, the temperature sensing apparatus includes two temperature sensors, one temperature sensor is disposed on a housing of the front drive motor 203, and the other temperature sensor is disposed on a housing of the rear drive motor 206. In this case, the primary controller 2011 may obtain the temperature of the front drive motor 203 by using the temperature sensor disposed on the housing of the front drive motor 203, and obtain the temperature of the rear drive motor 206 by using the temperature sensor disposed on the housing of the rear drive motor 206.

In an embodiment, the primary controller 2011 may measure the efficiency of the front drive motor 203 and the efficiency of the rear drive motor 206 based on the entire vehicle speed and an accelerator signal. Alternatively, the primary controller 2011 may obtain, in real time, a current output by the first inverter circuit 202 and an actual rotation speed of the front drive motor 203, and calculate the efficiency of the front drive motor 203 based on the current output by the first inverter circuit 202 and the actual rotation speed of the front drive motor 203. Similarly, the primary controller 2011 may alternatively obtain, in real time, a current output by the second inverter circuit 205 and an actual rotation speed of the rear drive motor 206, and calculate the actual rotation speed of the rear drive motor 206 based on the current output by the second inverter circuit 205 and the actual rotation speed of the rear drive motor 206.

In an embodiment, the primary controller 2011 may obtain entire vehicle mileage information from the electronic stability program 2014 or the anti-lock braking system 2013. It may be understood that the entire vehicle mileage information is obtained through calculation based on the entire vehicle speed and entire vehicle running time. The entire vehicle running time is related to the running duration of the front drive motor 203 and the running duration of the rear drive motor 206. To be specific, the primary controller 2011 may measure the running duration of the front drive motor 203 and the running duration of the rear drive motor 206 based on the entire vehicle mileage information. For example, if the front drive motor 203 is a main drive motor, and the rear drive motor 206 is an auxiliary drive motor, the primary controller 2011 may determine that the running duration of the front drive motor 203 is the entire vehicle running time, and the running duration of the rear drive motor 206 may be a preset percentage, for example, 90%, of the entire vehicle running time.

S303: In response to the accelerator signal or a brake signal of the electric vehicle, the primary controller 2011 outputs a torque allocation ratio of the front drive motor 203 to the rear drive motor 206 based on the driving mode of the electric vehicle, the running parameter of the electric vehicle, and the running parameter of the power system.

During specific implementation, in response to the accelerator signal or the brake signal of the electric vehicle, the primary controller 2011 calculates, based on an opening degree of the accelerator apparatus 208 and an opening degree of the brake apparatus 207, torque required by the entire vehicle. For example, the primary controller 2011 obtains, through calculation, that the torque required by the entire vehicle is 100 N.

The primary controller 2011 includes a plurality of torque allocation tables. Each of the plurality of torque allocation tables includes a correspondence between a plurality of reference torque allocation ratios and at least two parameters of the running parameter of the electric vehicle and the running parameter of the power system, such as a correspondence between the efficiency of the front drive motor, the efficiency of the rear drive motor, and the first reference torque allocation ratio, a correspondence between the temperature and the running duration of the front drive motor, the temperature and the running duration of the rear drive motor, and the second reference torque allocation ratio, and a correspondence between the entire vehicle speed, the steering wheel angle, and the third reference torque allocation ratio. In this case, based on the running parameter of the electric vehicle and the running parameter of the power system that are obtained in step S302, the primary controller 2011 searches for and determines the plurality of reference torque allocation ratios in the plurality of torque allocation tables.

In an embodiment, the plurality of torque allocation tables include a first torque allocation table, and the first torque allocation table includes a correspondence between the efficiency of the front drive motor 203, the efficiency of the rear drive motor 206, and the first reference torque allocation ratio. In this case, based on the efficiency of the front drive motor 203 and the efficiency of the rear drive motor 206 that are obtained in step S302, the primary controller 2011 may search for and determine the first reference torque allocation ratio in the first torque allocation table. In this case, the first torque allocation table may be understood as a torque allocation table corresponding to the first intelligent driving mode. The first intelligent driving mode is an energy consumption mode that may be understood as that the output efficiency of the front drive motor 203 and the output efficiency of the rear drive motor 206 are high. In this case, a reference torque allocation ratio of the front drive motor 203 to the rear drive motor 206 in the first intelligent driving mode is based on motor efficiency. For example, a reference torque allocation proportion of the front drive motor 203 in the first intelligent driving mode is represented as 20%, and a reference torque allocation proportion of the rear drive motor 206 in the first intelligent driving mode is represented as 80%. Alternatively, the reference torque allocation ratio of the front drive motor 203 to the rear drive motor 206 in the first intelligent driving mode may be represented as 2:8.

Optionally, in an embodiment, the primary controller 2011 may modify the first torque allocation table based on the temperature of the front drive motor 203 and the temperature of the rear drive motor 206. For example, it is assumed that the efficiency of the front drive motor 203 is the same as the efficiency of the rear drive motor 206. If the temperature of the front drive motor 203 is 10°, and the temperature of the rear drive motor 206 is 20°, the primary controller 2011 increases the reference torque allocation proportion of the front drive motor 203 in the first intelligent driving mode from 20% to 25%, and decreases the reference torque allocation proportion of the rear drive motor 206 in the first intelligent driving mode from 80% to 75%. Alternatively, if the temperature of the front drive motor 203 is 10°C, and the temperature of the rear drive motor 206 is 5°C, the primary controller 2011 decreases the reference torque allocation proportion of the front drive motor 203 in the first intelligent driving mode from 20% to 18%, and increases the reference torque allocation proportion of the rear drive motor 206 in the first intelligent driving mode from 80% to 82%. In conclusion, when the temperature of the front drive motor 203 is lower than the temperature of the rear drive motor 206, the primary controller 2011 may increase torque output by the front drive motor 203 by increasing the reference torque allocation proportion of the front drive motor 203 in the first intelligent driving mode, or when the temperature of the rear drive motor 206 is lower than the temperature of the front drive motor 203, the primary controller 2011 may increase torque output by the rear drive motor 206 by increasing the reference torque allocation proportion of the rear drive motor 206 in the first intelligent driving mode. It may be understood that, when torque output by the motor is increased, a current output by an inverter circuit to the motor is increased, heat generated by a magnetic loss and a copper loss of the motor is increased, and a temperature rise speed of the motor is increased. In this case, a speed of heating a power battery by the motor through a cooling loop may be further increased. In this embodiment of this application, the reference torque allocation ratio of the front drive motor to the rear drive motor in the first intelligent driving mode may be further adjusted based on the temperature of the front drive motor and the temperature of the rear drive motor, to adjust the torque output by the front drive motor and the torque output by the rear drive motor, so as to adjust temperature rise time of the front drive motor and temperature rise time of the rear drive motor.

In an embodiment, the plurality of torque allocation tables include a second torque allocation table, and the second torque allocation table includes a correspondence between the temperature and the running duration of the front drive motor 203, the temperature and the running duration of the rear drive motor 206, and the second reference torque allocation ratio. In this case, based on the temperature and the running duration of the front drive motor 203 and the temperature and the running duration of the rear drive motor 206 that are obtained in step S302, the primary controller 2011 may search for and determine the second reference torque allocation ratio in the second torque allocation table. In this case, the second torque allocation table may be understood as a torque allocation table corresponding to the second intelligent driving mode. In this case, the second intelligent driving mode is a service life mode, and a reference torque allocation ratio of the front drive motor 203 to the rear drive motor 206 in the second intelligent driving mode is based on a motor service life. For example, a reference torque allocation proportion of the front drive motor 203 in the second intelligent driving mode is represented as 60%, and a reference torque allocation proportion of the rear drive motor 206 in the second intelligent driving mode is represented as 40%. Alternatively, the reference torque allocation ratio of the front drive motor 203 to the rear drive motor 206 in the second intelligent driving mode may be represented as 6:4.

Optionally, in an embodiment, the primary controller 2011 may further obtain a remaining predicted service life of the front drive motor 203 and a remaining predicted service life of the rear drive motor 206 from the electronic stability program 2014 or the anti-lock braking system 2013 through the power CAN bus. Alternatively, the primary controller 2011 may determine the remaining predicted service life of the front drive motor 203 based on a manufacturer-preset service life curve of the front drive motor 203 and operating time of the front drive motor 203, and the primary controller 2011 may determine the remaining predicted service life of the rear drive motor 206 based on a manufacturer-preset service life curve of the rear drive motor 206 and operating time of the rear drive motor 206.

In this case, the primary controller 2011 may modify the second torque allocation table based on the remaining predicted service life of the front drive motor 203 and the remaining predicted service life of the rear drive motor 206. For example, it is assumed that the temperature and the running duration of the front drive motor 203 are respectively the same as the temperature and the running duration of the rear drive motor 206. If the remaining predicted service life of the front drive motor 203 is 500 hours, and the remaining predicted service life of the rear drive motor is 600 hours, the primary controller 2011 decreases the reference torque allocation proportion of the front drive motor 203 in the second intelligent driving mode from 60% to 53%, and increases the reference torque allocation proportion of the rear drive motor 206 in the second intelligent driving mode from 40% to 47%. In conclusion, when the remaining predicted service life of the front drive motor 203 is less than the remaining predicted service life of the rear drive motor 206, the primary controller 2011 may shorten a difference between an actual remaining service life of the front drive motor 203 and an actual remaining service life of the rear drive motor 206 by decreasing the reference torque allocation proportion of the front drive motor 203 in the second intelligent driving mode.

Similarly, when the remaining predicted service life of the front drive motor 203 is greater than the remaining predicted service life of the rear drive motor 206, the primary controller 2011 may shorten the difference between the actual remaining service life of the front drive motor 203 and the actual remaining service life of the rear drive motor 206 by decreasing the reference torque allocation proportion of the rear drive motor 206 in the second intelligent driving mode.

In this embodiment of this application, the reference torque allocation ratio of the front drive motor to the rear drive motor in the second intelligent driving mode may be further adjusted based on the remaining predicted service life of the front drive motor and the remaining predicted service life of the rear drive motor, to adjust the torque output by the front drive motor and the torque output by the rear drive motor, so as to adjust the actual remaining service life of the front drive motor and the actual remaining service life of the rear drive motor.

In an embodiment, the plurality of torque allocation tables include a third torque allocation table, and the third torque allocation table includes a correspondence between the entire vehicle speed, the steering wheel angle, and the third reference torque allocation ratio. In this case, based on the entire vehicle speed and the steering wheel angle that are obtained in step S302, the primary controller 2011 may search for and determine the third reference torque allocation ratio in the third torque allocation table. In this case, the third torque allocation table may be understood as a torque allocation table corresponding to the third intelligent driving mode. The third intelligent driving mode is a performance mode that may be understood as that a running rate of the primary controller 2011 is large. In this case, a reference torque allocation ratio of the front drive motor 203 to the rear drive motor 206 in the third intelligent driving mode is based on the running rate of the primary controller 2011. For example, a reference torque allocation proportion of the front drive motor 203 in the third intelligent driving mode is represented as 50%, and a reference torque allocation proportion of the rear drive motor 206 in the third intelligent driving mode is represented as 50%. Alternatively, the reference torque allocation ratio of the front drive motor 203 to the rear drive motor 206 in the third intelligent driving mode may be represented as 5:5.

Optionally, in an embodiment, the primary controller 2011 may modify the third torque allocation table based on the temperature of the front drive motor 203 and the temperature of the rear drive motor 206. For example, it is assumed that the entire vehicle speed and the steering wheel angle are the same. If the temperature of the front drive motor 203 is 10°, and the temperature of the rear drive motor 206 is 20°, the primary controller 2011 increases the reference torque allocation proportion of the front drive motor 203 in the third intelligent driving mode from 50% to 55%, and decreases the torque allocation proportion of the rear drive motor 206 in the third intelligent driving mode from 50% to 45%. Alternatively, if the temperature of the front drive motor 203 is 10°C, and the temperature of the rear drive motor 206 is 5°C, the primary controller 2011 decreases the reference torque allocation proportion of the front drive motor 203 in the third intelligent driving mode from 50% to 45%, and increases the reference torque allocation proportion of the rear drive motor 206 in the third intelligent driving mode from 50% to 55%. In conclusion, when the temperature of the front drive motor 203 is lower than the temperature of the rear drive motor 206, the primary controller 2011 may increase the torque output by the front drive motor 203 by increasing the reference torque allocation proportion of the front drive motor 203 in the third intelligent driving mode, or when the temperature of the rear drive motor 206 is lower than the temperature of the front drive motor 203, the primary controller 2011 may increase the torque output by the rear drive motor 206 by increasing the reference torque allocation proportion of the rear drive motor 206 in the third intelligent driving mode. It may be understood that, when torque output by the motor is increased, a current output by an inverter circuit to the motor is increased, heat generated by a magnetic loss and a copper loss of the motor is increased, and a temperature rise speed of the motor is increased. In this case, a speed of heating a power battery by the motor through a cooling loop may be further increased.

In this embodiment of this application, the reference torque allocation ratio of the front drive motor to the rear drive motor in the third intelligent driving mode may be further adjusted based on the temperature of the front drive motor and the temperature of the rear drive motor, to adjust the torque output by the front drive motor and the torque output by the rear drive motor, so as to adjust a temperature difference between the front drive motor and the rear drive motor.

In an embodiment, the plurality of driving modes further include the default driving mode. In the default driving mode, a reference torque allocation ratio of the front drive motor 203 to the rear drive motor 206 is preset. For example, if a reference torque allocation proportion of the front drive motor 203 in the default driving mode is 70%, a reference torque allocation proportion of the rear drive motor 206 in the default driving mode is 30%. To be specific, the torque output by the front drive motor 203 is 70% of the torque required by the entire vehicle, and the torque output by the rear drive motor 206 is 30% of the torque required by the entire vehicle.

The foregoing is a specific implementation of determining the reference torque allocation ratio of the front drive motor to the rear drive motor in each driving mode. It can be learned that the first intelligent driving mode is based on the motor efficiency, the second intelligent driving mode is based on the running rate of the controller, and the third intelligent driving mode is considered based on the motor service life.

The primary controller 2011 may determine a torque allocation ratio of the front drive motor to the rear drive motor based on the reference torque allocation ratio of the front drive motor to the rear drive motor and the group of weights corresponding to the driving mode of the electric vehicle.

During specific implementation, each driving mode corresponds to one group of weights, each group of weights includes a plurality of weight parameters, and one weight parameter corresponds to one torque allocation table. A correspondence between each driving mode and each group of weights is preset, and a correspondence between each weight parameter and a torque allocation table is preset.

For example, when learning that the electric vehicle is in the first intelligent driving mode, the primary controller 2011 determines a first group of weights that corresponds to the first intelligent driving mode. The first group of weights includes three weight parameters. For example, the three weight parameters in the first group of weights are 0.8, 0.1, and 0.1 respectively. In this case, when the electric vehicle is in the first intelligent driving mode, a weight parameter corresponding to the first torque allocation table is 0.8, a weight parameter corresponding to the second torque allocation table is 0.1, and a weight parameter corresponding to the third torque allocation table is 0.1. There is also a correspondence between each torque allocation table and a driving mode. In other words, when the electric vehicle is in the first intelligent driving mode, a weight parameter corresponding to the first intelligent driving mode is 0.8, a weight parameter corresponding to the second intelligent driving mode is 0.1, and a weight parameter corresponding to the third intelligent driving mode is 0.1. It can be learned that a sum of weight parameters of all intelligent driving modes is 1, that is, a sum of the weight parameter of the first intelligent driving mode, the weight parameter of the second intelligent driving mode, and the weight parameter of the third intelligent driving mode is 1.

In an embodiment, the primary controller 2011 may obtain the torque allocation ratio of the front drive motor 203 to the rear drive motor 206 in the first intelligent driving mode based on the weight parameters in the first group of weights that corresponds to the first intelligent driving mode and reference torque allocation ratios corresponding to the weight parameters. It should be explained that the torque allocation ratio of the front drive motor 203 to the rear drive motor 206 is an actual torque allocation ratio of the front drive motor 203 to the rear drive motor 206.

For example, when the electric vehicle is in the first intelligent driving mode, the primary controller 2011 determines the first group of weights, and three weight parameters included in the first group of weights are 0.8, 0.1, and 0.1. In addition, based on the efficiency of the front drive motor 203 and the efficiency of the rear drive motor 206, the primary controller 2011 searches for and determines, in the first torque allocation table, that the first reference torque allocation ratio is represented as 2:8, that is, the reference torque allocation proportion of the front drive motor 203 in the first intelligent driving mode is 20%, and the reference torque allocation proportion of the rear drive motor 206 in the first intelligent driving mode is 80%. Based on the temperature and the running duration of the front drive motor 203 and the temperature and the running duration of the rear drive motor 206, the primary controller 2011 searches for and determines, in the second torque allocation table, that the second reference torque allocation ratio is represented as 6:4, that is, the reference torque allocation proportion of the front drive motor 203 in the second intelligent driving mode is 60%, and the reference torque allocation proportion of the rear drive motor 206 in the second intelligent driving mode is 40%. Based on the entire vehicle speed and the steering wheel angle, the primary controller 2011 searches for and determines, in the third torque allocation table, that the third reference torque allocation ratio is represented as 5:5, that is, the reference torque allocation proportion of the front drive motor 203 in the third intelligent driving mode is 50%, and the reference torque allocation proportion of the rear drive motor 206 in the third intelligent driving mode is 50%.

A weight parameter corresponding to the first reference torque allocation ratio is 0.8, a weight parameter corresponding to the second reference torque allocation ratio is 0.1, and a weight parameter corresponding to the third reference torque allocation ratio is 0.1. In this case, the primary controller 2011 adds results obtained by multiplying each reference torque allocation ratio by a weight parameter corresponding to the reference torque allocation ratio, to obtain the actual torque allocation proportion of the front drive motor 203 and the actual torque allocation proportion of the rear drive motor 206 of the electric vehicle in the first intelligent driving mode. The actual torque allocation proportion of the front drive motor 203 in the first intelligent driving mode is specifically represented by using a formula 20% × 0.8 + 50% × 0.1 + 60% × 0.1 = 27%, and the actual torque allocation proportion of the rear drive motor 206 in the first intelligent driving mode is specifically represented by using a formula 80% × 0.8 + 50% × 0.1 + 40% × 0.1 = 73%.

The primary controller 2011 determines, based on the actual torque allocation proportion of the front drive motor 203 in the first intelligent driving mode, the actual torque allocation proportion of the rear drive motor 206 in the first intelligent driving mode, and the torque required by the entire vehicle, the torque output by the front drive motor 203 and the torque output by the rear drive motor 206 when the electric vehicle is in the first intelligent driving mode. For example, the torque required by the entire vehicle is 100 N. When the electric vehicle is in the first intelligent driving mode, the torque output by the front drive motor 203 is 100 × 27% = 27N, and the torque output by the rear drive motor 206 is 100 × 73% = 73N.

In this case, the primary controller 2011 may control a current output by the first inverter circuit 202 to the front drive motor 203, to control the torque output by the front drive motor 203 to be 27 N. In addition, the primary controller 2011 may send a control instruction to the secondary controller 2012, where the control instruction carries the torque output by the rear drive motor 206. The secondary controller 2012 controls a current output by the second inverter circuit 205 to the rear drive motor 206, to control the torque output by the rear drive motor 206 to be 73 N.

In an embodiment, the primary controller 2011 may obtain the torque allocation ratio of the front drive motor 203 to the rear drive motor 206 in the second intelligent driving mode based on weight parameters in a second group of weights that corresponds to the second intelligent driving mode and reference torque allocation ratios corresponding to the weight parameters.

For example, when the electric vehicle is in the second intelligent driving mode, the primary controller 2011 determines the second group of weights, and three weight parameters included in the second group of weights are 0.25, 0.25, and 0.5.

It should be noted that, when the electric vehicle switches from the first intelligent driving mode to the second intelligent driving mode, the reference torque allocation ratio of the front drive motor 203 to the rear drive motor 206 in various intelligent driving modes does not change, and weight parameters corresponding to the various intelligent driving modes in the second intelligent driving mode change. In other words, the first reference torque allocation ratio is still 2:8, that is, the reference torque allocation proportion of the front drive motor 203 in the first intelligent driving mode is 20%, and the reference torque allocation proportion of the rear drive motor 206 in the first intelligent driving mode is 80%. The second reference torque allocation ratio is still 6:4, that is, the reference torque allocation proportion of the front drive motor 203 in the second intelligent driving mode is 60%, and the reference torque allocation proportion of the rear drive motor 206 in the second intelligent driving mode is 40%. The third reference torque allocation ratio is still 5:5, that is, the reference torque allocation proportion of the front drive motor 203 in the third intelligent driving mode is 50%, and the reference torque allocation proportion of the rear drive motor 206 in the third intelligent driving mode is 50%.

The weight parameter corresponding to the first reference torque allocation ratio is 0.25, the weight parameter corresponding to the second reference torque allocation ratio is 0.25, and the weight parameter corresponding to the third reference torque allocation ratio is 0.5. In this case, the actual torque allocation proportion of the front drive motor 203 is specifically represented by using a formula 20% × 0.25 + 50% × 0.25 + 60% × 0.5 = 47.5%, and the actual torque allocation proportion of the rear drive motor 206 is specifically represented by using a formula 80% × 0.25 + 50% × 0.25 + 40% × 0.5 = 52.5%.

The primary controller 2011 determines, based on the actual torque allocation proportion of the front drive motor 203 and the actual torque allocation proportion of the rear drive motor 206 in the second intelligent driving mode and the torque required by the entire vehicle, torque output by the front drive motor 203 and torque output by the rear drive motor 206 when the electric vehicle is in the second intelligent driving mode. For example, the torque required by the entire vehicle is 100 N. When the electric vehicle is in the second intelligent driving mode, the torque output by the front drive motor 203 is 100 × 47.5% = 47.5*N*, and the torque output by the rear drive motor 206 is 100 × 52.5% = 52.5*N.*

In this case, the primary controller 2011 may control the current output by the first inverter circuit 202 to the front drive motor 203, to control the torque output by the front drive motor 203 to be 47.5 N. In addition, the primary controller 2011 may send a control instruction to the secondary controller 2012, where the control instruction carries the torque output by the rear drive motor 206. The secondary controller 2012 controls the current output by the second inverter circuit 205 to the rear drive motor 206, to control the torque output by the rear drive motor 206 to be 52.5 N.

In an embodiment, the primary controller 2011 may obtain the torque allocation ratio of the front drive motor 203 to the rear drive motor 206 in the third intelligent driving mode based on weight parameters in a third group of weights that corresponds to the third intelligent driving mode and reference torque allocation ratios corresponding to the weight parameters.

For example, when the electric vehicle is in the third intelligent driving mode, the primary controller 2011 determines the third group of weights, and three weight parameters in the third group of weights are 0.25, 0.5, and 0.25.

Similarly, when the electric vehicle switches from the first intelligent driving mode or the second intelligent driving mode to the third intelligent driving mode, the reference torque allocation ratio of the front drive motor 203 to the rear drive motor 206 in various intelligent driving modes does not change, and weight parameters corresponding to the various intelligent driving modes in the third intelligent driving mode change. In other words, the first reference torque allocation ratio is still 2:8, that is, the reference torque allocation proportion of the front drive motor 203 in the first intelligent driving mode is 20%, and the reference torque allocation proportion of the rear drive motor 206 in the first intelligent driving mode is 80%. The second reference torque allocation ratio is still 6:4, that is, the reference torque allocation proportion of the front drive motor 203 in the second intelligent driving mode is 60%, and the reference torque allocation proportion of the rear drive motor 206 in the second intelligent driving mode is 40%. The third reference torque allocation ratio is still 5:5, that is, the reference torque allocation proportion of the front drive motor 203 in the third intelligent driving mode is 50%, and the reference torque allocation proportion of the rear drive motor 206 in the third intelligent driving mode is 50%.

The weight parameter corresponding to the first reference torque allocation ratio is 0.25, the weight parameter corresponding to the second reference torque allocation ratio is 0.5, and the weight parameter corresponding to the third reference torque allocation ratio is 0.25. In this case, the actual torque allocation proportion of the front drive motor 203 is specifically represented by using a formula 20% × 0.25 + 50% × 0.5 + 60% × 0.25 = 45% , and the actual torque allocation proportion of the rear drive motor 206 is specifically represented by using a formula 80% × 0.25 + 50% × 0.5 + 40% × 0.25 = 55%.

The primary controller 2011 determines, based on the actual torque allocation proportion of the front drive motor 203 in the third intelligent driving mode, the actual torque allocation proportion of the rear drive motor 206 in the third intelligent driving mode, and the torque required by the entire vehicle, torque output by the front drive motor 203 and torque output by the rear drive motor 206 when the electric vehicle is in the third intelligent driving mode. For example, the torque required by the entire vehicle is 100 N. When the electric vehicle is in the third intelligent driving mode, the torque output by the front drive motor 203 is 100 × 45% = 45N, and the torque output by the rear drive motor 206 is 100 × 55% = 55*N.*

In this case, the primary controller 2011 may control the current output by the first inverter circuit 202 to the front drive motor 203, to control the torque output by the front drive motor 203 to be 45 N. In addition, the primary controller 2011 may send a control instruction to the secondary controller 2012, where the control instruction carries the torque output by the rear drive motor 206. The secondary controller 2012 controls the current output by the second inverter circuit 205 to the rear drive motor 206, to control the torque output by the rear drive motor 206 to be 55 N.

In conclusion, in different intelligent driving modes, weight parameters corresponding to various intelligent driving modes are different. Therefore, in different intelligent driving modes, torque allocation ratios obtained by adjusting weight parameters corresponding to the intelligent driving modes are different. It can be learned that, in embodiments of this application, the torque output by the motor is dynamically adjusted while impact of the motor efficiency, the running rate of the controller, and the motor service life is comprehensively considered. In embodiments of this application, the motor can be controlled with energy efficiency, power control, and the motor service life considered, so that power performance, economy, and use reliability of the electric vehicle are improved in a balanced manner.

In an embodiment, in response to that a change amplitude of either the running parameter of the electric vehicle or the running parameter of the power system exceeds a preset value, the primary controller 2011 adjusts the torque allocation ratio of the front drive motor 203 to the rear drive motor 206. For example, if the entire vehicle speed is greater than a first preset speed threshold, even if the electric vehicle does not switch the driving mode, the third reference torque allocation ratio searched for and determined by the primary controller 2011 in the third torque allocation table based on the entire vehicle speed changes, so that the torque allocation ratio of the front drive motor 203 to the rear drive motor 206 changes while the weight parameters are the same. Alternatively, when the primary controller 2011 detects that the entire vehicle speed is greater than the first preset speed threshold, if the electric vehicle is in the first intelligent driving mode, the second intelligent driving mode, or the default driving mode, the primary controller 2011 switches the electric vehicle to the third intelligent driving mode, so that the torque allocation ratio of the front drive motor 203 to the rear drive motor 206 changes.

In an embodiment, the primary controller 2011 obtains the running parameter of the electric vehicle and the running parameter of the power system according to a first frequency, and the primary controller 2011 outputs the torque allocation ratio of the front drive motor 203 to the rear drive motor 206 according to a second frequency. The first frequency is greater than the second frequency. In this case, the primary controller 2011 may output the torque allocation ratio of the front drive motor 203 to the rear drive motor 206 after performing a plurality of averaging operations on the motion parameter of the electric vehicle and the motion parameter of the power system. In this case, the obtained torque allocation ratio of the front drive motor 203 to the rear drive motor 206 is more accurate.

In an embodiment, regardless of whether the electric vehicle is in the first intelligent driving mode, the second intelligent driving mode, or the third intelligent driving mode, when the primary controller 2011 detects that a vehicle speed of the electric vehicle is greater than a second preset speed threshold, the primary controller 2011 increases a reference torque allocation proportion of the front drive motor 203 in each intelligent driving mode, and controls the first inverter circuit 202 to increase the current output to the front drive motor 203. In this case, the torque output by the front drive motor 203 increases.

For example, the primary controller 2011 searches for and determines, in the first torque allocation table, that the reference torque allocation proportion of the front drive motor 203 in the first intelligent driving mode is 20%, and the reference torque allocation proportion of the rear drive motor 206 in the first intelligent driving mode is 80%. If the primary controller 2011 detects that the vehicle speed of the electric vehicle is greater than the second preset speed threshold, the primary controller 2011 increases the reference torque allocation proportion of the front drive motor 203 in the first intelligent driving mode, for example, increases the reference torque allocation proportion to 25%. Because a sum of the reference torque allocation proportion of the front drive motor 203 in the first intelligent driving mode and the reference torque allocation proportion of the rear drive motor 206 in the first intelligent driving mode is 100%, in this case, the reference torque allocation proportion of the rear drive motor 206 in the first intelligent driving mode is 75%. It should be explained that, when the vehicle speed of the electric vehicle is greater than the second preset speed threshold, it may be considered that the electric vehicle is in a high-speed driving state. That is, when the electric vehicle is in the high-speed driving state, the primary controller 2011 may increase, according to aerodynamics, the reference torque allocation proportion of the front drive motor 203 in the first intelligent driving mode, to increase the torque output by the front drive motor 203, and decrease the torque output by the rear drive motor 206. In practice, the front drive motor 203 may be a motor configured to drive a front wheel, that is, a front drive; and the rear drive motor 206 may be a motor configured to drive a rear wheel, that is, a rear drive. Therefore, when the electric vehicle is in the high-speed driving state, the torque output by the front drive may be increased, and the torque output by the rear drive may be decreased, to increase a grip force of the electric vehicle and prevent the vehicle from slipping, thereby improving driving safety.

In an embodiment, regardless of whether the electric vehicle is in the first intelligent driving mode, the second intelligent driving mode, or the third intelligent driving mode, when the primary controller 2011 detects that a mileage of the electric vehicle is greater than a preset mileage threshold, the primary controller 2011 decreases a reference torque allocation proportion of the front drive motor 203 in each intelligent driving mode, and controls the first inverter circuit 202 to decrease the current output to the front drive motor 203. In this case, the torque output by the front drive motor 203 decreases.

For example, the primary controller 2011 searches for and determines, in the first torque allocation table, that the reference torque allocation proportion of the front drive motor 203 in the first intelligent driving mode is 20%, and the reference torque allocation proportion of the rear drive motor 206 in the first intelligent driving mode is 80%. If the primary controller 2011 detects that the mileage of the electric vehicle is greater than the preset mileage threshold, the primary controller 2011 decreases the reference torque allocation proportion of the front drive motor 203 in the first intelligent driving mode, for example, decreases the reference torque allocation proportion to 15%. Because a sum of the reference torque allocation proportion of the front drive motor 203 in the first intelligent driving mode and the reference torque allocation proportion of the rear drive motor 206 in the first intelligent driving mode is 100%, in this case, the reference torque allocation proportion of the rear drive motor 206 in the first intelligent driving mode is 85%. It should be explained that two motors are disposed in the vehicle, and the two motors may be motors of different types. For example, the front drive motor 203 is a synchronous motor, and the rear drive motor 206 is an asynchronous motor. Generally, the synchronous motor is a main drive motor, that is, the front drive motor 203 is the main drive motor. In a vehicle driving process, the main drive motor performs a large amount of external work. In this case, when the mileage of the electric vehicle is greater than the preset mileage threshold, it may be considered that the main drive motor is overworked. In this case, the primary controller 2011 decreases the reference torque allocation proportion of the front drive motor 203 in the first intelligent driving mode, to decrease the torque output by the front drive motor 203, and increase the torque output by the rear drive motor 206. In embodiments of this application, the primary drive can be avoided from over-working and the auxiliary drive can be avoided from being idle, so that service lives of the two motors can be better balanced.

In an embodiment, the primary controller 2011 may further obtain steering information of the electric vehicle from the electronic stability program 2014 or the anti-lock braking system 2013 through the power CAN bus. Alternatively, the input end of the primary controller 2011 may be connected to a steering sensor, to obtain steering information of the electric vehicle from the steering sensor.

Regardless of whether the electric vehicle is in the first intelligent driving mode, the second intelligent driving mode, or the third intelligent driving mode, when the primary controller 2011 detects that the steering information of the electric vehicle carries a target identifier, where the target identifier is used to determine that the electric vehicle is in a turning state, the primary controller 2011 increases a reference torque allocation ratio of each intelligent driving mode for the rear drive motor 206, and controls the second inverter circuit 205 to increase a current output to the rear drive motor 206. In this case, the torque output by the rear drive motor 206 increases.

For example, the primary controller 2011 searches for and determines, in the first torque allocation table, that the reference torque allocation proportion of the front drive motor 203 in the first intelligent driving mode is 20%, and the reference torque allocation proportion of the rear drive motor 206 in the first intelligent driving mode is 80%. If the primary controller 2011 determines that the electric vehicle is in the turning state, the primary controller 2011 increases the reference torque allocation proportion of the rear drive motor 206 in the first intelligent driving mode, for example, increases the reference torque allocation proportion to 83%. Because a sum of the reference torque allocation proportion of the front drive motor 203 in the first intelligent driving mode and the reference torque allocation proportion of the rear drive motor 206 in the first intelligent driving mode is 100%, in this case, the reference torque allocation proportion of the front drive motor 203 in the first intelligent driving mode is 17%. In practice, the front drive motor 203 may be a motor configured to drive a front wheel, that is, a front drive; and the rear drive motor 206 may be a motor configured to drive a rear wheel, that is, a rear drive. Therefore, when the electric vehicle is in the turning state, the torque output by the rear drive is increased, to help the electric vehicle turn, thereby improving driving performance of the electric vehicle.

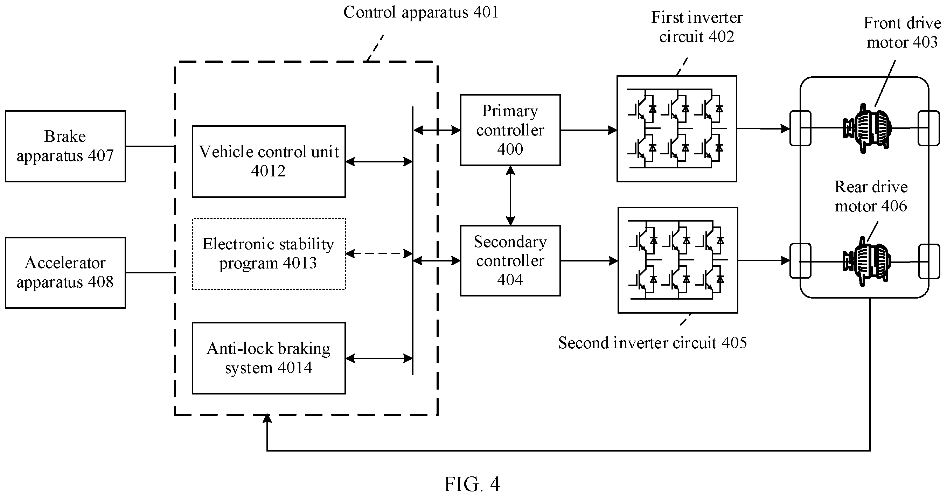

In an embodiment, a structure of an electric drive system 101 may be shown in FIG. 4. The electric drive system 101 includes a control apparatus 401, a first inverter circuit 402, a front drive motor 403, a second inverter circuit 405, and a rear drive motor 406.

An input end of the control apparatus 401 is connected to a brake apparatus 407 and an accelerator apparatus 408. Different from the control apparatus 201 shown in FIG. 2, the control apparatus 401 provided in this embodiment of this application includes a vehicle control unit 4012, and a power system includes a primary controller 400 and a secondary controller 404.

In this case, the brake apparatus 407 and the accelerator apparatus 408 are specifically connected to the vehicle control unit 4012, and an output end of the vehicle control unit 4012 is connected to a power CAN bus. An input end of the primary controller 400 and an input end of the secondary controller 404 are connected to the power CAN bus. An output end of the primary controller 400 is connected to a control end of the first inverter circuit 402, an output end of the secondary controller 404 is connected to a control end of the second inverter circuit 405, and an input end of the first inverter circuit 402 and an input end of the second inverter circuit 405 are connected to a power battery. In addition, an output end of the first inverter circuit 402 is connected to the front drive motor 403. In this case, the first inverter circuit 402 may convert a voltage of the power battery, to output a current to the front drive motor 403, so as to drive the front drive motor 403. An output end of the second inverter circuit 405 is connected to the rear drive motor 406. In this case, the second inverter circuit 405 may convert the voltage of the power battery, to output a current to the rear drive motor 406, so as to drive the rear drive motor 406.

In an embodiment, the primary controller 400 is connected to a communication end of the secondary controller 404.

During specific implementation, the vehicle control unit 4012 obtains a driving mode of an electric vehicle, a running parameter of the electric vehicle, and a running parameter of the power system, and in response to an accelerator signal or a brake signal of the electric vehicle, outputs a torque allocation ratio of the front drive motor 403 to the rear drive motor 406 based on the driving mode of the electric vehicle, the running parameter of the electric vehicle, and the running parameter of the power system. For a specific implementation, refer to descriptions of step S301 to step S303.

A difference lies in that in this embodiment of this application, the vehicle control unit 4012 determines the torque allocation ratio of the front drive motor 403 to the rear drive motor 406, or torque output by the front drive motor 403 and torque output by the rear drive motor 406 may be directly obtained through calculation based on torque required by the entire vehicle and the torque allocation ratio of the front drive motor 403 to the rear drive motor 406.

A first torque allocation table, a second torque allocation table, a third torque allocation table, and a weight parameter corresponding to each torque allocation table are all set in the vehicle control unit 4012.

In an embodiment, the vehicle control unit 4012 may obtain, through calculation, the torque output by the front drive motor 403 and the torque output by the rear drive motor 406, deliver the torque output by the front drive motor 403 to the primary controller 400, and deliver the torque output by the rear drive motor 406 to the secondary controller 404.

Optionally, in an embodiment, the vehicle control unit 4012 may deliver the torque required by the entire vehicle, a plurality of torque allocation tables, and weight parameters corresponding to the plurality of torque allocation tables to the primary controller 400 and the secondary controller 404, so that the primary controller 400 controls, based on the torque required by the entire vehicle, the first torque allocation table, the second torque allocation table, the third torque allocation table, and the weight parameter corresponding to each torque allocation table, a current output by the first inverter circuit 402 to the front drive motor 403, and the secondary controller 404 controls, based on the torque required by the entire vehicle, the first torque allocation table, the second torque allocation table, the third torque allocation table, and the weight parameter corresponding to each torque allocation table, a current output by the second inverter circuit 405 to the rear drive motor 406.

It can be learned that, in the electric drive system shown in FIG. 4, the vehicle control unit 4012 obtains the driving mode of the electric vehicle, the running parameter of the electric vehicle, and the running parameter of the power system, and outputs the torque allocation ratio of the front drive motor 403 to the rear drive motor 406. In embodiments of this application, an effect described in FIG. 2 can still be implemented, that is, the torque output by the motor is dynamically adjusted while impact of the motor efficiency, the running rate of the controller, and the motor service life are comprehensively considered. By implementing embodiments of this application, energy efficiency, power control, and the motor service life can be considered, so that power performance, economy, and use reliability of the electric vehicle are improved in a balanced manner.

It should be noted that the terms "first" and "second" are merely intended for a purpose of description, and shall not be understood as an indication or implication of relative importance.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A control apparatus for a power system of an electric vehicle, wherein the electric vehicle comprises a plurality of driving modes, the power system comprises a front drive motor and a rear drive motor, the control apparatus is configured to control a torque allocation ratio of the front drive motor to the rear drive motor in the power system, and the control apparatus is configured to:
obtain a driving mode of the electric vehicle;
obtain a running parameter of the electric vehicle, wherein the running parameter of the electric vehicle comprises an entire vehicle speed and a steering wheel angle;
obtain a running parameter of the power system, wherein the running parameter of the power system comprises temperatures, efficiency, and running duration of the front drive motor and the rear drive motor; and
in response to an accelerator signal or a brake signal of the electric vehicle, output the torque allocation ratio of the front drive motor to the rear drive motor based on the driving mode of the electric vehicle, the running parameter of the electric vehicle, and the running parameter of the power system.

2. The control apparatus according to claim 1, wherein when the electric vehicle runs in any one of the plurality of driving modes, the control apparatus is configured to:
in response to that a change amplitude of either the running parameter of the electric vehicle or the running parameter of the power system exceeds a preset value, adjust the torque allocation ratio of the front drive motor to the rear drive motor.

3. The control apparatus according to either claim 1 or claim 2, wherein the control apparatus comprises a vehicle control unit, and the power system comprises a primary controller and a secondary controller, wherein
the vehicle control unit is configured to separately send, based on the torque allocation ratio, a control instruction to the primary controller and the secondary controller; and
the primary controller and the secondary controller are configured to respectively adjust, based on the control instructions sent by the vehicle control unit, torque output by the front drive motor and torque output by the rear drive motor.

4. The control apparatus according to either claim 1 or claim 2, wherein the control apparatus comprises a primary controller and a secondary controller, wherein
the primary controller is configured to: adjust, based on the torque allocation ratio, torque output by the front drive motor, and send a control instruction to the secondary controller based on a torque allocation proportion of the rear drive motor; and
the secondary controller is configured to adjust, based on the control instruction sent by the primary controller, torque output by the rear drive motor.

5. The control apparatus according to any one of claims 1 to 4, wherein the electric vehicle comprises an accelerator apparatus and a brake apparatus, the accelerator apparatus is configured to: receive triggering and output the accelerator signal, the brake apparatus is configured to receive triggering and output the brake signal, and an input end of the control apparatus is configured to directly connect to the accelerator apparatus and the brake apparatus to receive the accelerator signal and the brake signal.

6. The control apparatus according to any one of claims 1 to 5, wherein the electric vehicle comprises an angle sensing apparatus, the angle sensing apparatus is configured to monitor and output a steering wheel angle signal, and the input end of the control apparatus is configured to directly connect to the angle sensing apparatus to receive the steering wheel angle signal.

7. The control apparatus according to any one of claims 1 to 6, wherein the front drive motor and the rear drive motor each are provided with a temperature sensing apparatus, the temperature sensing apparatuses are configured to: obtain the temperature of the front drive motor and the temperature of the rear drive motor and output temperature signals, and the control apparatus is configured to directly connect to the temperature sensing apparatuses to receive the temperature signals.

8. The control apparatus according to any one of claims 1 to 7, wherein the control apparatus is configured to obtain the running parameter of the electric vehicle and the running parameter of the power system according to a first frequency; and
the control apparatus is configured to output the torque allocation ratio of the front drive motor to the rear drive motor according to a second frequency, wherein
the first frequency is greater than the second frequency.

9. The control apparatus according to any one of claims 1 to 8, wherein the control apparatus comprises a plurality of torque allocation tables and a plurality of groups of weights, the plurality of torque allocation tables comprise a correspondence between a plurality of reference torque allocation ratios and at least two parameters of the running parameter of the electric vehicle and the running parameter of the power system, each of the plurality of groups of weights corresponds to one driving mode, each group of weights comprises a plurality of weight parameters, one of the plurality of weight parameters corresponds to one torque allocation table in the plurality of torque allocation tables, and the control apparatus is configured to:
search for and determine the plurality of reference torque allocation ratios in the plurality of torque allocation tables based on the running parameter of the electric vehicle and the running parameter of the power system; and
output the torque allocation ratio of the front drive motor to the rear drive motor based on one group of weights corresponding to the driving mode of the electric vehicle and the plurality of reference torque allocation ratios.

10. The control apparatus according to claim 9, wherein the plurality of torque allocation tables comprise a first torque allocation table, the plurality of reference torque allocation ratios comprise a first reference torque allocation ratio, the first torque allocation table comprises a correspondence between the efficiency of the front drive motor, the efficiency of the rear drive motor, and the first reference torque allocation ratio, and the control apparatus is further configured to:
search for and determine the first reference torque allocation ratio in the first torque allocation table based on the obtained efficiency of the front drive motor and the obtained efficiency of the rear drive motor.

11. The control apparatus according to claim 10, wherein the plurality of torque allocation tables comprise a second torque allocation table, the plurality of reference torque allocation ratios comprise a second reference torque allocation ratio, the second torque allocation table comprises a correspondence between the temperature and the running duration of the front drive motor, the temperature and the running duration of the rear drive motor, and the second reference torque allocation ratio, and the control apparatus is further configured to:
search for and determine the second reference torque allocation ratio in the second torque allocation table based on the obtained temperature and running duration of the front drive motor and the obtained temperature and running duration of the rear drive motor.

12. The control apparatus according to claim 11, wherein the plurality of torque allocation tables comprise a third torque allocation table, the plurality of reference torque allocation ratios comprise a third reference torque allocation ratio, the third torque allocation table comprises a correspondence between the entire vehicle speed, the steering wheel angle, and the third reference torque allocation ratio, and the control apparatus is further configured to:
search for and determine the third reference torque allocation ratio in the third torque allocation table based on the obtained vehicle speed and the steering wheel angle.

13. The control apparatus according to claim 12, wherein the control apparatus is configured to:
determine one group of weights based on the driving mode of the electric vehicle; and
obtain, through calculation based on the first reference torque allocation ratio and a weight parameter corresponding to the first reference torque allocation ratio, the second reference torque allocation ratio and a weight parameter corresponding to the second reference torque allocation ratio, and the third reference torque allocation ratio and a weight parameter corresponding to the third reference torque allocation ratio, a torque allocation ratio corresponding to the driving mode of the electric vehicle.

14. An electric drive system, wherein the electric drive system comprises a front drive motor, a rear drive motor, a first inverter circuit, a second inverter circuit, and the control apparatus according to any one of claims 1 to 13, the first inverter circuit is configured to output a current to drive the front drive motor, the second inverter circuit is configured to output a current to drive the rear drive motor, and the first inverter circuit and the second inverter circuit are respectively configured to adjust output currents based on a torque allocation ratio output by the control apparatus.

15. An electric vehicle, wherein the electric vehicle comprises a power battery and the electric drive system according to claim 14.
